# EUROPEAN PATENT SPECIFICATION

(11) **EP 4 499 715 B1**
(45) Date of publication and mention of the grant of the patent: **20.08.2025**
(21) Application number: 23725396.8
(22) Date of filing: 10.05.2023
(51) Int. Cl.: C08B 37/00

(54) **SUSTAINABLE ESTERIFICATION OF SEAWEED CARBOHYDRATES WITH FATTY ACID DERIVATIVES**
NACHHALTIGE VERESTERUNG VON ALGENKOHLENHYDRATEN MIT FETTSÄUREDERIVATEN
ESTÉRIFICATION DURABLE DE GLUCIDES D'ALGUES AVEC DES DÉRIVÉS D'ACIDES GRAS

(30) Priority: 10.05.2022 GB 202206804
(43) Date of publication of application: 05.02.2025
(73) Proprietor: Kelp Industries Ltd, Bristol BS2 0NS (GB)
(72) Inventor: CHUCK, Christopher, Bristol BS3 3DT (GB); FEDERLE, Stefanie, Bath BA2 2UD (GB); PICCINI, Marco, Bath, BA1 3BW (GB)
(74) Representative: Sirius IP
(86) International application number: PCT/GB2023/051221
(87) International publication number: WO 2023/218185

(56) References cited:
- US-A1- 2011 172 166
- KONDAVEETI S. ET AL: "Synthesis of self-assembly of agarose-fatty acid ester nanoparticles", INDIAN JOURNAL OF CHEMISTRY, vol. 53A, 3 June 2014 (2014-06-03), pages 679 - 687, XP093062236, Retrieved from the Internet <URL:https://nopr.niscpr.res.in/bitstream/123456789/28856/2/IJCA%2053A(6)%20679-687.pdf>
- CARSTEN GROTE ET AL: "Starch Derivatives of High Degree of Functionalization 11: Studies on Alternative Acylation of Starch with Long-chain Fatty Acids Homogeneously in N,N-dimethyl acetamide/LiCl", CELLULOSE, KLUWER ACADEMIC PUBLISHERS (DORDRECHT), NL, vol. 12, no. 4, 1 August 2005 (2005-08-01), pages 435 - 444, XP019234574, ISSN: 1572-882X, DOI: 10.1007/S10570-005-2178-Z

## Description

The present invention relates to an improved method for preparing fatty acid esters of polysaccharides derived from seaweed.

### BACKGROUND OF INVENTION

There are a number of significant challenges involved in the replacement of petroleum-derived plastic materials with biomass-derived alternatives, such as feedstock sourcing and cost, processing conditions and final material performance.

Carbohydrates, including seaweed-derived polysaccharides such as sodium alginate, agar and carrageenan, are promising biopolymers for the production of novel biomaterials. However, due to the hydrophilic nature of these carbohydrates direct replacement of fossil-derived plastics, which demonstrate highly water resistant properties, is not attainable. One possible route to increase the hydrophobic nature of these biopolymers is the esterification reaction with long chain fatty acid derivatives. This esterification process converts polar hydroxyl groups of the polysaccharide into hydrophobic esters with long alkane chains. While the conversion can be hindered by low reactivity and solubility issues of the carbohydrate starting materials, the formed modified ester derivatives exhibit promising properties for bioplastics applications.

As such, carbohydrate long-chain esters are traditionally manufactured by recurring to acyl chlorides and excess organic bases. Although this route is efficient, said substances are highly toxic to humans and the environment, and represent a significant cost and ultimately a barrier to industrial production and commercialisation.

So far, alternative processes have mainly focused on replacing acyl chlorides with lower-cost fatty acids and esters. However, due to the lower reactivity of these derivatives and the abovementioned intrinsic low reactivity of polysaccharides, the extent of functionalisation is often very limited, resulting in poor product performance preventing commercial exploitation.

Kondaveeti et al. (Indian Journal of Chemistry, 2014, vol. 53A, pages 679-687) describe a microwave assisted synthesis of hydrophobically modified nano-sized particulate esters of agarose and stearic and palmitic acids, using carbodiimide chemistry.

Grote et al. (Cellulose, vol. 12, pages 435-444) describe a study in which starch materials of different amylose content were reacted with saturated and unsaturated fatty acids of varying chain length from C₁₄ to C₁₈ under homogenous conditions applying the solvent N,N-dimethyl acetamide in combination with LiCl.

US2011/172166A1 describes anionic polysaccharides functionalized by at least one hydrophobic acid derivative.

Esterification pathways that are more sustainable and easy to scale are therefore needed, while maintaining a high degree of functionalisation and product performance.

### STATEMENT OF INVENTION

According to a first aspect of the present invention, there is provided a method of preparing a fatty acid ester derivative of polysaccharide derived from seaweed, comprising:
reacting at least one polysaccharide derived from seaweed with a fatty acid source comprising: a fatty acid; an activator; and a solvent;
wherein the at least one polysaccharide derived from seaweed is selected from one or more of: agar, agarose, carrageenan, fucoidan, laminarin, or any combination thereof;
wherein the activator is selected from the group consisting of trifluoromethanesulfonyl chloride, p-toluenesulfonyl chloride and methanesulfonyl chloride; or any combination thereof; and
wherein the solvent is imidazole.

Reference hereinbelow to "polysaccharide" should be interpreted as meaning "polysaccharide derived from seaweed". The term "Polysaccharide derived from seaweed" includes "macroalgal polysaccharide" and a "phycocolloid". Thus, in one embodiment "polysaccharide derived from seaweed" is macroalgal polysaccharide. In one embodiment "polysaccharide derived from seaweed" is a phycocolloid.

### BRIEF DESCRIPTION OF FIGURES

Figure 1 is an infrared spectroscopy graph comparing the absorption peaks for agar, palmitic acid and for agar functionalised with a palmitic acid source (Example 4).
Figure 2 shows a water drop on the surface of a sheet of agar functionalised with palmitic acid (Example 6).

### DETAILED DESCRIPTION

The method of the invention provides the fatty acid derivatives having a high degree of functionalisation, while avoiding the use of fatty acid acyl chlorides. The fatty acid derivatised polysaccharides produced by the method of the invention are hydrophobic and have excellent water barrier properties, as shown in Example 6.

In the method of the invention, the polysaccharide derived from seaweed is derivatised to form a proportion of fatty acid ester moieties. Specifically, a proportion of the hydroxyl groups of the polysaccharide are esterified to form fatty acid ester moieties. The fatty acid derivative is a fatty acid ester, wherein at least a proportion of the hydroxyl groups of the polysaccharide obtained from seaweed have been esterified to form fatty acid esters.

In one embodiment, the method of the invention provides a fatty acid ester derivative wherein at least 20% of the hydroxyl groups of the polysaccharide obtained from seaweed have been esterified to form fatty acid esters, such as at least 25%, at least 30%, at least 35%, at least 40%, at least 45%, at least 50%, at least 55%, at least 60%, at least 65%, at least 70%, at least 75% or at least 80%.

The functionalisation yield (corresponding to the % of hydroxyl groups of the polysaccharide derived from seaweed that have been esterified) is determined as set out in the Evaluation Methods.

The at least one polysaccharide derived from seaweed is selected from one or more of: agar (technical or biological grade), agarose, carrageenan, fucoidan, laminarin, or any combination thereof. Preferably the at least one polysaccharide derived from seaweed is selected from agar (technical or biological grade) and/or carrageenan. Preferably the at least one polysaccharide is agar (technical or biological grade).

The fatty acid source comprises a fatty acid. Preferably, the fatty acid source is a fatty acid.

The fatty acid source preferably has a chain length of at least C₁₂. For the avoidance of doubt, the "chain length" includes the carbon attached to the carbonyl group (e.g. an example of a C₁₂ fatty acid source is lauric acid). In one embodiment, the chain is branched. In another embodiment, the chain is unbranched. Preferably, the chain is unbranched. In one embodiment, the chain contains unsaturation. In another embodiment, the chain is saturated. Preferably, the chain is saturated. Preferably, the fatty acid source has a chain length of no more than C₁₈. Preferably, the fatty acid source has a chain length of one or more of: C₁₂, C₁₆, and/or C₁₈.

The at least one fatty acid is preferably selected from: octanoic acid, lauric acid, linoleic acid, palmitic acid, stearic acid, myristic acid, or any combination thereof. The at least one fatty acid is preferably selected from: lauric acid, myristic acid, palmitic acid, stearic acid, or any combination thereof. The at least one fatty acid is preferably selected from: palmitic acid or stearic acid, or any combination thereof.

In the method of the invention, typically a suspension of (the at least one) polysaccharide obtained from seaweed in a solvent is prepared, and then the (at least one) fatty acid source is added to the suspension.

In one embodiment, the molar ratio of the at least one fatty acid source to the polymer repeat unit of the at least one polysaccharide (within the reaction mixture) is at least 0.1:1, for example at least 0.5:1. In one embodiment, the ratio of the at least one fatty acid source to the polymer repeat unit of the at least one polysaccharide (within the reaction mixture) is no more than 10:1.

The at least one fatty acid source is preferably in stoichiometric excess to the polymer repeat unit of the at least one polysaccharide (within the reaction mixture). For example, the molar ratio of the at least one fatty acid source to the polymer repeat unit of the at least one polysaccharide (within the reaction mixture) is preferably at least 1.1:1, preferably at least 1.5:1, preferably at least 2:1, preferably at least 3:1, for example 5:1.

Thus, in one embodiment, the molar ratio of the at least one fatty acid source to the polymer repeat unit of the at least one polysaccharide is in the range of from 0.1:1 to 10:1, such as from 0.5:1 to 10:1, from 1.1:1 to 10:1 or from 1.5:1 to 10:1. Preferably the molar ratio of the at least one fatty acid source to the polymer repeat unit of the at least one polysaccharide is in the range of from 2:1 to 10:1, preferably from 3:1 to 10:1.

The method may further comprise drying the at least one polysaccharide derived from seaweed prior to functionalisation. The at least one polysaccharide derived from seaweed may be oven dried, for example at 50°C.

The solvent is imidazole.

Suitably, the solvent is non aqueous. In the context of the present invention, non aqueous refers to solvent that contains less than 1% (v/v), such as less than 0.5 % (v/v), 0.4% (v/v), 0.3% (v/v), 0.2% (v/v), 0.1% (v/v), 0.05% (v/v) or 0.01% (v/v) of water.

In one embodiment, the solvent is present in the reaction mixture in an amount of 1-250 mL per gram of polysaccharide derived from seaweed e.g. 2-50 mL of solvent, 4-30 mL of solvent or about 15 mL of solvent is used for every gram of polysaccharide derived from seaweed.

In the context of the present invention, the activator is a moiety that is capable of enhancing the electrophilicity of the fatty acid source (in particular the fatty acid) carbonyl group, or it is a moiety that is capable of converting the hydroxyl groups of the polysaccharide into better leaving groups. The exact mechanism of the activator may be a combination of mechanisms, or it may be unknown. For example, it is hypothesized in the literature that using p-toluenesulfonyl chloride as activator may result in sulphonate formation of the fatty acid source (in particular fatty acid) and/or activation of the alcohol groups of the polysaccharide by conversion to sulphonate groups.

The activator is a chemical moiety rather than a biological moiety. For example, the activator is not an enzyme. The activator is not a catalyst for the esterification reaction. In particular, the activator is not a strong acid catalyst or a strong base catalyst. Thus, in one embodiment, the reaction mixture does not contain added strong acid or added strong base.

The activator is selected from one or more of: trifluoromethanesulfonyl chloride, p-toluenesulfonyl chloride, methanesulfonyl chloride, or any combination thereof. In one embodiment, the activator is preferably selected from one or more of: p-toluenesulfonyl chloride, methanesulfonyl chloride, or any combination thereof. In a preferred embodiment, the activator is p-toluenesulfonyl chloride.

Suitably, the activator is present in the reaction mixture at a proportion of 2 - 20 molar equivalents vs. the polysaccharide repeat unit, such as 2 - 10 molar equivalents or 5 - 8 molar equivalents. In one embodiment, 4 - 6 molar equivalents of activator (vs. the polysaccharide repeat unit) are present, such as about 5 molar equivalents.

In one embodiment, the activator is used together with a base. In one embodiment, the base is a nitrogen-containing (in particular an amine-containing) organic base. Suitably, the base is selected from the group consisting of pyridine, triethylamine, 4-dimethylaminopyridine (DMAP), imidazole and 1-methylimidazole; and mixtures thereof. In one embodiment, the base is selected from the group consisting of pyridine, DMAP, imidazole and 1-methylimidazole; and mixtures thereof. In one embodiment, the base is selected from the group consisting of pyridine, DMAP and imidazole; and mixtures thereof, and in particular is pyridine, imidazole, 1-methylimidazole or a mixture thereof. In one embodiment the base is pyridine. In one embodiment, the base is imidazole and/or 1-methylimidazole. In embodiments where the base is pyridine, imidazole and/or 1-methylimidazole the base may also act as solvent if present at sufficient volume. Suitably, the base is present in the reaction mixture at a proportion of 2-20 molar equivalents vs. the polysaccharide repeat unit, such as 5-15 molar equivalents, 8-12 molar equivalents or about 10 molar equivalents.

In one embodiment, the method comprises reacting the polysaccharide with a fatty acid or fatty acid ester; an activator; and a solvent, optionally in the presence of a base.

The reaction mixture is preferably stirred or agitated during the reaction, for example using a mechanical stirrer.

The method preferably further comprises heating the reaction mixture to a temperature of between room temperature and 300°C. Preferably, the temperature of the reaction mixture is at least 30 °C, for example at least 80 °C. The temperature of the reaction mixture is preferably no more than 200 °C, no more than 130 °C, preferably no more than 110 °C. In one embodiment, the temperature of the reaction mixture is between room temperature and 200 °C, such as between 30 °C to 130 °C, preferably between 30 °C to 110 °C, for example about 80 °C.

In one embodiment, the temperature of the reaction mixture is 65-110 °C, such as 70-110 °C or 75-110°C.

The method preferably further comprises precipitating the fatty acid ester derivative of a polysaccharide obtained from seaweed. The method preferably further comprises the addition of water and/or ethanol to initiate/cause precipitation of the at least one fatty acid ester derivative of polysaccharides obtained from seaweed. Alternatively, the method preferably further comprises the addition the reaction mixture to water and/or ethanol, to initiate/cause precipitation of the at least one fatty acid ester derivative of polysaccharides obtained from seaweed. In both cases, suitably, the precipitation is initiated/caused by the addition of ethanol.

Preferably, the method further comprises obtaining the fatty acid ester derivative of polysaccharides obtained from seaweed by filtration. Filtration may comprise vacuum filtration.

The precipitated fatty acid ester derivative of at least one polysaccharide obtained from seaweed may be washed, for example with hot ethanol, to remove further impurities.

The precipitated, and optionally washed, fatty acid ester derivative of at least one polysaccharide obtained from seaweed is preferably dried, for example oven dried. The fatty acid ester derivative(s) may for example be dried at a temperature of 50 °C.

The reaction time for the reaction is preferably at least 30 minutes. The reaction time for the reaction is preferably no more than 72 hours. For example, the reaction time is preferably between 3 and 72 hours, for example between 3 and 24 hours, for example about 6 hours.

In one embodiment, is provided a method of preparing a fatty acid ester derivative of a polysaccharide derived from seaweed, comprising:
reacting at least one polysaccharide derived from seaweed with a fatty acid source comprising a fatty acid; an activator; and a solvent;
wherein the at least one polysaccharide is agar and the at least one fatty acid is palmitic acid or stearic acid;
wherein the activator is selected from the group consisting of trifluormethanesulfonyl chloride, p-toluenesulfonyl chloride and methanesulfonyl chloride; and mixtures thereof (and in particular is p-toluenesulfonyl chloride and/or methanesulfonyl chloride); and
wherein the solvent is imidazole.
Suitably, the molar ratio of the at least one fatty acid source to the polymer repeat unit of the at least one polysaccharide is in the range of from 3:1 to 10:1. Suitably, at least 50% of the hydroxyl groups of the polysaccharide derived from seaweed have been esterified to form fatty acid esters, such as at least 55%, at least 60%, at least 65%, at least 70%, at least 75% or at least 80%.

In all of the above embodiments, the imidazole used as solvent may also function as a base.

### ABBREVIATIONS

- CDI: 1,1'-carbonyldiimidazole
- DCC: N,N'-dicyclohexylcarbodiimide
- DIC: N,N'-diisopropylcarbodiimide
- DMAc: dimethylacetamide
- DMAP: 4-dimethylaminopyridine
- DMF: dimethylformamide
- DMSO: dimethylsulfoxide
- FTIR: Fourier-transform infrared
- MsCl: methanesulfonyl chloride
- TsCl: toluenesulfonyl chloride

### EXAMPLES

### Evaluation Methods

### Determining the extent of functionalisation

The extent of esterification of the polysaccharide derived from seaweed corresponds to the percentage of hydroxyl groups of the polysaccharide derived from seaweed that have been esterified according to the method of the invention. The extent of esterification is quantified gravimetrically and is calculated as the ratio between weight gain after reaction and theoretical maximum weight of covalently bound fatty acid groups. This % value is also known as the functionalisation yield.

### Fourier-transform infrared spectroscopy (FTIR)

Infrared (FTIR) spectra were recorded on a Perkin Elmer Frontier FT-IR equipped with a zinc selenide crystal ATR module. Each spectrum was recorded with 8 scans between 4,000 and 400 cm⁻¹, with a resolution of 4 cm⁻¹. FTIR spectra are plotted as transmittance (%) vs. wavelength (cm⁻¹). Intensity of a particular signal is reported as % transmittance (%T) of the signal's maximum (minimum transmittance value). In the Examples below where the palmitate derivative of agar is formed, the new ester moieties produce a new ester signal at ca. 1742 cm-1. Absence of this signal generally indicates absence of ester groups; when the signal is observed, transmittance values close to 100% (for example 98% or 95%) generally indicate low concentration of ester groups, while lower values (for example 80% or 70%, corresponding to 20% and 30% absorbance, respectively), generally indicate higher concentration of ester groups.

### Example 1 - Investigation of esterification reaction conditions (not according to claim 1)

In order to determine suitable reaction conditions for forming a fatty acid derivatised polysaccharide, agar (0.5 g) was suspended with various palmitic acyl functionalisation agents (5 molar equivalents per repeat unit of the polysaccharide), in pyridine (7.5 ml), optionally in the presence of an activator (5 molar equivalents per repeat unit of the polysaccharide). Each reaction mixture was stirred at 105 °C for 24 hours under magnetic stirring. The results are shown in Table 1 below. The functionalisation yield and FTIR intensity were calculated as set out in Evaluation Methods.

**Table 1: Functionalisation yield and FTIR intensity for various palmitic acyl functionalisation agents, optionally in the presence of an activator**

| **Functionalisation agent** | **Activator** | **Funct. Yield (%)** | **FTIR %T ^{~}1742 cm-1** |
|---|---|---|---|
| Palmitoyl chloride | - | 73 | 73 |
| Palmitic acid | - | 0 | 100 |
| Methyl palmitate | - | 0 | 100 |
| Palmitic anhydride | - | 2 | 91 |
| Palmitic acid | TsCl | 60 | 77 |

It can be seen that reaction with the acid chloride palmitoyl chloride produced the desired fatty acid derivatised agar ester in a functionalisation yield of 73%, with 73% FTIR ester transmittance. Reaction with methyl palmitate and palmitic anhydride yield an insignificant amount of, or no, fatty acid derivatised ester. Palmitic acid also failed to produce any esterified product, but when combined with the activator TsCl produced the desired fatty acid derivatised ester in a functionalisation yield of 60%, with 77% FTIR ester transmittance. As such, using a fatty acid as functionalisation agent together with the activator TsCl avoids the use acyl chlorides while providing material which is equally good in terms of functionalisation yield and % FTIR ester transmittance.

### Example 2 - Method for the formation of functionalised polysaccharide derived from seaweed using fatty acid, TsCl as activator (only imidazole as solvent is according to claim 1)

Pre-dried (50 °C, overnight) agar (1 g) and palmitic acid (5.0 - 8.0 molar equivalents vs. polymer repeat unit) are suspended in a solvent (selected from DMAc, DMF, pyridine, imidazole and 1-methylimidazole, and combinations thereof)) (7.5 ml) into a round bottom flask under magnetic stirring. An activator, *p*-toluenesulfonyl chloride (5.0 - 8.0 molar equivalents vs. polymer repeat unit) is added. The mixture is stirred at 60 -130 °C for 6 to 72 hours under magnetic or mechanical stirring. The mixture is then cooled. Ethanol is added, the solid filtered under reduced pressure and washed repeatedly with hot ethanol to provide a palmitic acid ester agar. Using 5.0 molar equivalents of TsCl and DMAc as solvent, heated at 80 °C for 24 hours, the desired palmitate agar ester was produced with a functionalisation yield of 53% and % FTIR ester transmittance of 75% (calculated as set out in the Evaluation Methods).

### Example 3 - Method for the formation of functionalised polysaccharide derived from seaweed using fatty acid, DCC as activator and optionally a base (not according to claim 1)

Pre-dried (50 °C, overnight) agar (0.5 g) and palmitic acid (5.0 molar equivalents vs. polymer repeat unit) are suspended in dimethylacetamide (7.5 ml) into a round bottom flask under magnetic stirring. An activator, N,N'-dicyclohexylcarbodiimide (6.0 molar equivalents vs. polymer repeat unit) and optionally a base, 4-dimethylaminopyridine (0.8 molar equivalents vs. polymer repeat unit) are added. The mixture is stirred at 40 - 80 °C for 5 to 24 hours under magnetic stirring. The mixture is then cooled. Ethanol is added, the solid filtered under reduced pressure and washed repeatedly with hot ethanol to provide a palmitic acid ester agar.

### Example 4 - Characterisation of functionalised polysaccharides derived from seaweed

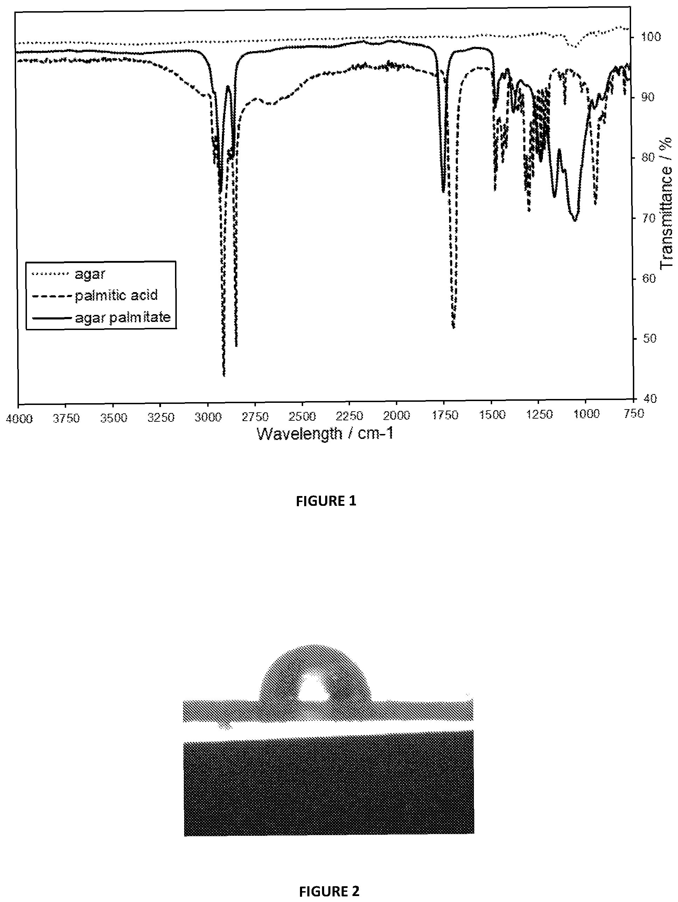

The functionalised polysaccharides were evaluated using FTIR, as set out in Evaluation Methods. Figure 1 illustrates the overlapped infrared spectrum of agar, palmitic acid and agar palmitate formed according to the method of Example 2, carried out at 80°C for 24 hours. The new ester signal is clearly visible at ca. 1742 cm⁻¹. The functionalisation yield was determined to be 53%.

### Examples 5 - Further investigation of reaction conditions

Agar was reacted with palmitic acid in the presence of differing types and amounts of activators and bases, over differing time periods. Table 2 summarises the reaction conditions, the intensity (as % transmittance) of the signal at 1742 cm⁻¹ of the newly formed ester group during the functionalisation reaction, and the functionalisation yield (determined as set out in Evaluation Methods). The first entry in Table 2 corresponds to the agar functionalised with palmitic acid as prepared in Example 2.

**Table 2 (only entries 21 and 26 are according to claim 1)**

| **Activator (Molar eq*)** | **Base (Molar eq*)** | **Solvent** | **Temp. (°C)** | **Time (h)** | **FTIR (%T @1742 cm⁻¹)** | **Funct. Yield (%)** |
|---|---|---|---|---|---|---|
| TsCl (5.0) | - | DMAc | 80 | 24 | 75 | 53 |
| TsCl (5.0) | - | DMAc | 60 | 24 | 93 | 4 |
| TsCl (5.0) | - | DMAc | 80 | 6 | 88 | 9 |
| TsCl (8.0) | - | DMAc | 80 | 24 | 74 | 39 |
| TsCl (5.0) | - | DMAc + LiCl (20mol%) | 80 | 24 | 79 | 4 |
| TsCl (5.0) | - | DMF | 80 | 24 | 80 | 41 |
| TsCl (5.0) | - | DMAc | 80 | 72 | 76 | 18 |
| TsCl (5.0) | Pyridine (10.0) | DMAc | 80 | 24 | 91 | - |
| MsCl (5.0) | - | DMAc | 80 | 24 | 75 | 51 |
| MsCl (5.0) | - | DMF | 80 | 24 | 81 | 39 |
| DIC (5.0) | DMAP (0.8) | DMAc | 80 | 24 | 99 | 1 |
| DIC (5.0) | DMAP (0.8) | DMAc | 40 | 24 | 94 | 7 |
| DCC (5.0) | DMAP (0.8) | DMAc | 80 | 5 | 84 | 16 |
| DCC (5.0) | DMAP (0.8) | DMAc | 40 | 24 | 87 | 12 |
| CDI (5.0) | DMAP (0.8) | DMAc | 80 | 24 | 96 | 3 |
| CDI (5.0) | - | DMAc | 80 | 24 | 95 | 3 |
| TsCl (5.0) | Pyridine** | pyridine | 80 | 3 | 92 | 14 |
| TsCl (5.0) | Pyridine** | pyridine | 105 | 3 | 86 | 48 |
| TsCl (5.0) | Pyridine** | Pyridine | 105 | 24 | 77 | 60 |
| TsCl (5.0) | Pyridine** | pyridine | 80 | 24 | 86 | 38 |
| TsCl (5.0) | Imidazole** | imidazole | 115 | 6 | 77 | 69 |
| TsCl (5.0) | Imidazole** | imidazole + toluene (1:1) | 105 | 6 | 86 | 62 |
| TsCl (5.0) | Imidazole** | imidazole + DMAc (3:1) | 105 | 6 | 84 | 51 |
| TsCl (5.0) | 1-methylimidazol e** | 1-methylimidazo le | 105 | 6 | 92 | 25 |
| TsCl (5.0) | imidazole + 1-methylimidazol e** | imidazole + 1-methylimidazo le (3:1) | 105 | 6 | 94 | 32 |
| TsCl (8.0) | Imidazole** | imidazole | 105 | 6 | 75 | 68 |

| | | | | | | |
|---|---|---|---|---|---|---|
| * vs polysaccharide repeat unit ** used as solvent, therefore > 25 (total if more than one base is present) | | | | | | |

The Examples in Table 2 demonstrate methods for preparing fatty-acid esterified polysaccharides derived from seaweed using differing types and amounts of activators and bases, over differing time periods and at different temperatures.

### Example 6 - Hydrophobic nature of fatty acid derivatised polysaccharide

Agar functionalised with palmitic acid, prepared according to Example 2 (Table 2, entry 1), exhibits a hydrophobic nature due to the presence of the long chain hydrocarbon moieties. When agar is placed into a beaker of water it sinks to the bottom and swells, whereas the agar functionalised with palmitic acid swims on the water surface without any absorption of water occurring.

The repellence of water was further demonstrated by placing a droplet of water onto the surface of a sheet of agar functionalised with palmitic acid (produced by hot pressing the material into a sheet). Figure 2 shows the water droplet beading on the surface with a contact angle of 92° highlighting the hydrophobic nature of the material. Liquid water did not permeate through a sheet of the material for at least 72 hours (maximum testing time).

## Claims

1. A method of preparing a fatty acid ester derivative of a polysaccharide derived from seaweed, comprising:
reacting at least one polysaccharide derived from seaweed with a fatty acid source comprising a fatty acid; an activator; and a solvent;
wherein the at least one polysaccharide derived from seaweed is selected from one or more of: agar, agarose, carrageenan, fucoidan, laminarin, or any combination thereof;
wherein the activator is selected from the group consisting of trifluoromethanesulfonyl chloride, p-toluenesulfonyl chloride and methanesulfonyl chloride; or any combination thereof; and
wherein the solvent is imidazole.

2. A method as claimed in claim 1, in which the fatty acid source has a chain length of at least C₁₂; and/or
in which the fatty acid source has a chain length of no more than C₁₈.

3. A method as claimed in claim 1 or claim 2, comprising heating the reaction mixture to a temperature of between room temperature and 300 °C; and/or
wherein the temperature is at least 30 °C or at least 80 °C; and/or
wherein the temperature is no more than 200 °C, no more than 130 °C, or no more than 110°C.

4. A method as claimed in any preceding claim, in which the molar ratio of fatty acid source to the polymer repeat unit of polysaccharide derived from seaweed is between 0.1:1 and 10:1.

5. A method as claimed in any one of claims 1 to 4, in which the at least one fatty acid source is selected from one or more of: octanoic, lauric acid, linoleic acid, palmitic acid, stearic acid, myristic acid, or any combination thereof.

6. A method as claimed in any one of claims 1 to 5, wherein the reaction is carried out in the presence of a base.

7. A method as claimed in claim 6, in which the base is selected from the group consisting of pyridine, triethylamine, 4-dimethylaminopyridine (DMAP), imidazole and 1-methylimidazole; e.g. the base is pyridine, DMAP, imidazole or 1-methylimidazole; and in particular is pyridine, imidazole or 1-methylimidazole.

8. A method as claimed in any one of claims 1 to 7, wherein for every gram of polysaccharide derived from seaweed, 1-250 mL, such as 2-50 mL, such as 4-30 mL or about 15 mL of solvent is used.

9. A method as claimed in claim 8, in which the activator is p-toluenesulfonyl chloride and/or methanesulfonyl chloride.

10. A method as claimed in any one of claims 1 to 9, wherein the activator is present in the reaction mixture at a proportion of 2 - 20 molar equivalents vs. the polysaccharide repeat unit, such as 2 - 10 molar equivalents, 5 - 8 molar equivalents, 4 - 6 molar equivalents, or about 5 molar equivalents.

11. A method as claimed in any preceding claim, further comprising precipitating the fatty acid ester derivative of polysaccharides obtained from seaweed.

12. A method as claimed in claim 11, in which precipitation occurs on addition of water or ethanol to the reaction mixture.

13. A method as claimed in either of claims 11 or 12, further comprising obtaining the fatty acid ester derivative of polysaccharides obtained from seaweed by filtration; and/or
further comprising washing the fatty acid ester derivative of polysaccharides obtained from seaweed with water and/or ethanol, and subsequently drying.

## Patentansprüche

1. Verfahren zum Herstellen eines Fettsäureesterderivats eines von Algen gewonnenen Polysaccharids, umfassend:
Umsetzen zumindest eines von Algen gewonnenen Polysaccharids mit einer Fettsäurequelle, umfassend eine Fettsäure; einen Aktivator; und ein Lösungsmittel;
wobei das zumindest eine Polysaccharid, das aus Algen gewonnen ist, ausgewählt ist aus einem oder mehreren von: Agar, Agarose, Carrageen, Fucoidan, Laminarin oder einer beliebigen Kombination davon;
wobei der Aktivator ausgewählt ist aus der Gruppe bestehend aus Trifluormethansulfonylchlorid, p-Toluolsulfonylchlorid und Methansulfonylchlorid; oder einer beliebigen Kombination davon; und
wobei das Lösungsmittel Imidazol ist.

2. Verfahren wie in Anspruch 1 beansprucht, bei welchem die Fettsäurequelle eine Kettenlänge von zumindest C₁₂ aufweist; und/oder
bei welchem die Fettsäurequelle eine Kettenlänge von nicht mehr als C₁₈ aufweist.

3. Verfahren, wie in Anspruch 1 oder Anspruch 2 beansprucht, umfassend das Erhitzen des Reaktionsgemisches auf eine Temperatur zwischen Raumtemperatur und 300 °C; und/oder
wobei die Temperatur zumindest 30 °C oder zumindest 80 °C beträgt; und/oder
wobei die Temperatur nicht mehr als 200 °C, nicht mehr als 130 °C oder nicht mehr als 110 °C beträgt.

4. Verfahren, wie in einem der vorhergehenden Ansprüche beansprucht, bei welchem das Molverhältnis der Fettsäurequelle zu der Polymerwiederholungseinheit des aus Algen gewonnenen Polysaccharids zwischen 0,1:1 und 10:1 liegt.

5. Verfahren, wie in einem der Ansprüche 1 bis 4 beansprucht, wobei die zumindest eine Fettsäurequelle aus einem oder mehreren der Folgenden ausgewählt ist: Octanoat, Laurinsäure, Linolsäure, Palmitinsäure, Stearinsäure, Myristinsäure oder einer beliebigen Kombination davon.

6. Verfahren, wie in einem der Ansprüche 1 bis 5 beansprucht, wobei die Reaktion in der Gegenwart einer Base durchgeführt wird.

7. Verfahren, wie in Anspruch 6 beansprucht, bei welchem die Base ausgewählt ist aus der Gruppe bestehend aus Pyridin, Triethylamin, 4-Dimethylaminopyridin (DMAP), Imidazol und 1-Methylimidazol; z.B. ist die Base Pyridin, DMAP, Imidazol oder 1-Methylimidazol; und insbesondere ist sie Pyridin, Imidazol oder 1-Methylimidazol.

8. Verfahren, wie in einem der Ansprüche 1 bis 7 beansprucht, wobei für jedes Gramm Polysaccharid, das aus Algen gewonnen wird, 1-250 ml, wie etwa 2-50 ml, wie etwa 4-30 ml oder etwa 15 ml Lösungsmittel verwendet werden.

9. Verfahren, wie in Anspruch 8 beansprucht, bei welchem der Aktivator p-Toluolsulfonylchlorid und/oder Methansulfonylchlorid ist.

10. Verfahren, wie in einem der Ansprüche 1 bis 9 beansprucht, wobei der Aktivator in der Reaktionsmischung in einem Anteil von 2 - 20 Moläquivalenten ggü. der Polysaccharid-Wiederholungseinheit, wie etwa 2 - 10 Moläquivalente, 5 - 8 Moläquivalente, 4 - 6 Moläquivalente oder etwa 5 Moläquivalenten vorliegt.

11. Verfahren, wie in einem der vorhergehenden Ansprüche beansprucht, ferner umfassend das Ausfällen des Fettsäureesterderivats von Polysacchariden, die aus Algen erhalten werden.

12. Verfahren, wie in Anspruch 11 beansprucht, bei welchem die Fällung bei Zugabe von Wasser oder Ethanol zu der Reaktionsmischung erfolgt.

13. Verfahren, wie in einem der Ansprüche 11 oder 12 beansprucht, ferner umfassend das Erhalten des Fettsäureesterderivats von Polysacchariden, die aus Algen durch Filtration erhalten werden; und/oder
ferner umfassend Waschen des Fettsäureesterderivats von Polysacchariden, die aus Algen erhalten werden, mit Wasser und/oder Ethanol und anschließend Trocknen.

## Revendications

1. Procédé de préparation d'un dérivé d'ester d'acide gras d'un polysaccharide dérivé d'algues, comprenant :
la mise en réaction d'au moins un polysaccharide dérivé d'algues avec une source d'acide gras comprenant un acide gras ; un activateur ; et un solvant ;
dans lequel l'au moins un polysaccharide dérivé d'algues est choisi parmi un ou plusieurs parmi : l'agar-agar, l'agarose, la carraghénine, le fucoïdane, la laminarine, ou toute combinaison de ceux-ci ;
dans lequel l'activateur est choisi dans le groupe constitué du chlorure de trifluorométhanesulfonyle, du chlorure de *p*-toluènesulfonyle et du chlorure de méthanesulfonyle ; ou de toute combinaison de ceux-ci ; et
dans lequel le solvant est l'imidazole.

2. Procédé selon la revendication 1, dans lequel la source d'acide gras présente une longueur de chaîne d'au moins C₁₂ ; et/ou
dans lequel la source d'acide gras présente une longueur de chaîne ne dépassant pas C₁₈.

3. Procédé selon la revendication 1 ou la revendication 2, comprenant le chauffage du mélange réactionnel à une température située entre la température ambiante et 300 °C ; et/ou
dans lequel la température est d'au moins 30 °C ou d'au moins 80 °C ; et/ou
dans lequel la température n'est pas supérieure à 200 °C, n'est pas supérieure à 130 °C ou n'est pas supérieure à 110 °C.

4. Procédé selon une quelconque revendication précédente, dans lequel le rapport molaire source d'acide gras/unité de répétition polymère de polysaccharide dérivé d'algues est situé entre 0,1:1 et 10:1.

5. Procédé selon l'une quelconque des revendications 1 à 4, dans lequel l'au moins une source d'acide gras est choisie parmi un ou plusieurs parmi : octanoïque, l'acide laurique, l'acide linoléique, l'acide palmitique, l'acide stéarique, l'acide myristique, ou toute combinaison de ceux-ci.

6. Procédé selon l'une quelconque des revendications 1 à 5, dans lequel la réaction est réalisée en présence d'une base.

7. Procédé selon la revendication 6, dans lequel la base est choisie dans le groupe constitué de la pyridine, de la triéthylamine, de la 4-diméthylaminopyridine (DMAP), de l'imidazole et du 1-méthylimidazole ; par exemple, la base est la pyridine, la DMAP, l'imidazole ou le 1-méthylimidazole ; et en particulier est la pyridine, l'imidazole ou le 1-méthylimidazole.

8. Procédé selon l'une quelconque des revendications 1 à 7, dans lequel pour chaque gramme de polysaccharide dérivé d'algues, 1 à 250 ml, par exemple 2 à 50 ml, par exemple 4 à 30 ml ou environ 15 ml de solvant sont utilisés.

9. Procédé selon la revendication 8, dans lequel l'activateur est le chlorure de *p-*toluènesulfonyle et/ou le chlorure de méthanesulfonyle.

10. Procédé selon l'une quelconque des revendications 1 à 9, dans lequel l'activateur est présent dans le mélange réactionnel en une proportion de 2 à 20 équivalents molaires par rapport à l'unité de répétition de polysaccharide, par exemple 2 à 10 équivalents molaires, 5 à 8 équivalents molaires, 4 à 6 équivalents molaires, ou environ 5 équivalents molaires.

11. Procédé selon une quelconque revendication précédente, comprenant en outre la précipitation du dérivé d'ester d'acide gras de polysaccharides obtenus à partir d'algues.

12. Procédé selon la revendication 11, dans lequel la précipitation se produit lors de l'ajout d'eau ou d'éthanol au mélange réactionnel.

13. Procédé selon l'une quelconque des revendications 11 ou 12, comprenant en outre l'obtention du dérivé d'ester d'acide gras de polysaccharides obtenus à partir d'algues par filtration ; et/ou
comprenant en outre le lavage du dérivé d'ester d'acide gras de polysaccharides obtenus à partir d'algues avec de l'eau et/ou de l'éthanol, et ensuite le séchage.
